# EUROPEAN PATENT APPLICATION

(11) **EP 4 742 321 A1**
(43) Date of publication of application: **13.05.2026**
(21) Application number: 24895475.2
(22) Date of filing: 24.05.2024
(51) Int. Cl.: H01M 4/36, H01M 4/48

(54) **SILICON-CARBON NEGATIVE ELECTRODE MATERIAL AND PREPARATION METHOD THEREFOR**

(30) Priority: 28.11.2023 CN 202311619241
(71) Applicant: Contemporary Amperex Technology Co., Limited, Ningde, Fujian 352100 (CN)
(72) Inventor: XIE, Shuai, Ningde, Fujian 352100 (CN); WANG, Jiazheng, Ningde, Fujian 352100 (CN); LIU, Liangbin, Ningde, Fujian 352100 (CN); LYU, Zijian, Ningde, Fujian 352100 (CN); CHEN, Wenqiang, Ningde, Fujian 352100 (CN); DENG, Jingxian, Ningde, Fujian 352100 (CN); GUO, Xiaoxin, Ningde, Fujian 352100 (CN); SU, Yingwei, Ningde, Fujian 352100 (CN)
(74) Representative: Ziebig Hengelhaupt Intellectual Property Attorneys Patentanwaltskanzlei PartGmbB
(86) International application number: PCT/CN2024/095292
(87) International publication number: WO 2025/112365

(57) **Abstract**

A silicon-carbon negative electrode material and a preparation method therefor are provided. the silicon-carbon negative electrode material includes a carbon skeleton having a pore structure and a silicon-based material arranged in the pore structure, where in a region formed by extending from a surface of the silicon-carbon negative electrode material inward by 10 nm away from the surface, a content of high-valence silicon is less than 25% relative to a total amount of low-valence silicon and the high-valence silicon, where the low-valence silicon is silicon with a valence of 0 to 2, and the high-valence silicon is silicon with a valence of 3 to 4. For the silicon-carbon negative electrode material, the specific delithiated capacity and the initial coulombic efficiency of the silicon-carbon negative electrode material can be improved, and the specific discharge capacity and the initial coulombic efficiency of a secondary battery can be enhanced.

## Description

### CROSS-REFERENCE TO RELATED APPLICATIONS

The present disclosure is proposed based on Chinese Patent Application No. 202311619241.X, filed on November 28, 2023 and entitled "SILICON-CARBON NEGATIVE ELECTRODE MATERIAL AND PREPARATION METHOD THEREFOR", which is incorporated herein by reference in its entirety, and claims priority to the Chinese Patent Application.

### TECHNICAL FIELD

The present disclosure relates to the field of battery technologies, and in particular, to a silicon-carbon negative electrode material and a preparation method therefor.

### BACKGROUND

With continuous improvement of power of power consuming devices such as a mobile phone, a computer, an electric tool, and an electric vehicle, requirements of people on an energy density of a secondary battery also increase accordingly. A silicon-based negative electrode material has a relatively high specific capacity. Currently, the industry already starts to improve the energy density of a secondary battery by adding a silicon-based negative electrode material to a negative electrode plate. However, a volume expansion rate of the silicon-based negative electrode material increases after lithiation, which may cause cracking of the negative electrode plate.

To resolve the problem that the volume expansion rate of the silicon-based negative electrode material is high, currently, a silicon-carbon negative electrode material formed by depositing silicon inside porous carbon is mostly used, and expansion of the silicon-based material is reduced by using voids inside the porous carbon. However, because the silicon in the silicon-carbon negative electrode material is converted into high-valence silicon, the specific capacity of the silicon-carbon negative electrode material decreases, and the initial coulombic efficiency of the secondary battery is affected.

### SUMMARY

The present disclosure is provided in view of the foregoing subject. An objective of the present disclosure is to provide a silicon-carbon negative electrode material and a preparation method therefor. The specific delithiated capacity and the initial coulombic efficiency of the silicon-carbon negative electrode material are high, and then the specific discharge capacity and the initial coulombic efficiency of a secondary battery can be enhanced.

To achieve the foregoing objective, a first aspect of the present disclosure provides a silicon-carbon negative electrode material, where the silicon-carbon negative electrode material includes a carbon skeleton having a pore structure and a silicon-based material arranged in the pore structure, where in a region formed by extending from a surface of the silicon-carbon negative electrode material inward by 10 nm away from the surface, a content of high-valence silicon is less than 25% relative to a total amount of low-valence silicon and the high-valence silicon, where the low-valence silicon is silicon with a valence of 0 to 2, and the high-valence silicon is silicon with a valence of 3 to 4.

In the silicon-carbon negative electrode material of the present disclosure, the content of high-valence silicon is suppressed to a low level, so that the content of low-valence silicon is high, thereby improving the specific delithiated capacity and the initial coulombic efficiency of the negative electrode material, and effectively improving the specific discharge capacity and the initial coulombic efficiency of a secondary battery.

In some implementations, in the region formed by extending from the surface of the silicon-carbon negative electrode material inward by 10 nm away from the surface, the content of the high-valence silicon is less than or equal to 20% relative to the total amount of the low-valence silicon and the high-valence silicon. Therefore, the negative electrode material has higher specific delithiated capacity and initial coulombic efficiency, and the obtained secondary battery has better specific discharge capacity and initial coulombic efficiency.

In some implementations, in a region formed from a distance of 10 nm away from the surface of the silicon-carbon negative electrode material to a distance of 20 nm away from the surface of the silicon-carbon negative electrode material, the content of the high-valence silicon is less than or equal to 20% relative to the total amount of the low-valence silicon and the high-valence silicon, and optionally, less than or equal to 10%. Therefore, in the silicon-carbon negative electrode material of the present disclosure, the content of high-valence silicon is further suppressed to a low level, which is more beneficial to improving specific delithiated capacity and initial coulombic efficiency of the negative electrode material.

In some implementations, in a region formed from a distance of 20 nm away from the surface of the silicon-carbon negative electrode material to a distance of 30 nm away from the surface of the silicon-carbon negative electrode material, the content of the high-valence silicon is less than or equal to 10% relative to the total amount of the low-valence silicon and the high-valence silicon, and optionally, less than or equal to 5%. Therefore, in the silicon-carbon negative electrode material of the present disclosure, the content of high-valence silicon is further suppressed to a low level, which is more beneficial to improving specific delithiated capacity and initial coulombic efficiency of the negative electrode material.

In some implementations, the silicon-carbon negative electrode material satisfies at least one of the following conditions: (1) a volume distribution particle size Dv50 of the silicon-carbon negative electrode material is 5 µm to 10 µm, and optionally, 6 µm to 9 µm; (2) a specific surface area of the silicon-carbon negative electrode material is less than or equal to 5 m²/g, and optionally, less than or equal to 2 m²/g; (3) a powder compacted density of the silicon-carbon negative electrode material under a pressure of 3000 N is 0.8 g/cm³ to 1.2 g/cm³, and optionally, 0.9 g/cm³ to 1.2 g/cm³; (4) a tapped density of the silicon-carbon negative electrode material is 0.9 g/cm³ to 1.1 g/cm³, and optionally, 1.0 g/cm³ to 1.1 g/cm³; and (5) a specific delithiated capacity of the silicon-carbon negative electrode material is 800 mAh/g to 2500 mAh/g, and optionally, 1000 mAh/g to 2000 mAh/g. By causing the particle size, the compacted density, and the tapped density of the silicon-carbon negative electrode material to fall within the foregoing ranges, the compacted density of the electrode plate can be effectively increased, and the energy density of the cell can be increased. In addition, by causing the specific surface area to be less than 5 m²/g, the contact region between the particle and the electrolytic solution can be reduced as much as possible, and the initial coulombic efficiency, the cycle performance, and the storage performance can be improved.

In some implementations, a pore volume of the carbon skeleton is 0.4 cm³/g to 1.5 cm³/g, optionally 0.6 cm³/g to 1.2 cm³/g; and/or a volume proportion of micropores whose pore diameters are less than 2 nm relative to the pore volume is greater than or equal to 60%, and optionally, greater than or equal to 80%. Therefore, the silicon-based material is mainly deposited in the micropores. A higher micropore proportion indicates a larger quantity of silicon-based materials to be deposited, and a corresponding higher specific delithiated capacity.

In some implementations, the surface of the silicon-carbon negative electrode material has a coating layer; and optionally, the coating layer is a carbon coating layer. In the present disclosure, through the coating layer, a risk that the silicon in the negative electrode material is oxidized to form high-valence silicon is greatly reduced, and a content of high-valence silicon in the silicon-carbon negative electrode material is reduced.

A second aspect of the present disclosure provides a preparation method for the silicon-carbon negative electrode material according to the first aspect. The preparation method includes the following steps:
a step of forming silicon-carbon particles, where the carbon skeleton having the pore structure is allowed to react with a silicon source gas to form silicon-carbon particles having the silicon-based material in the pore structure; and
a step of treating the silicon-carbon particles, where a mixed gas including a carbon source gas and an inert gas is fed to the silicon-carbon particles at a gas feeding amount greater than 0 L/min and less than or equal to 10 L/min under a condition that a temperature is 500 °C to 800 °C and a pressure is 0 kpa to 1 kpa, and the carbon source gas is selected from at least one of ethane, ethylene, acetylene, and methane.

Through the foregoing preparation method, a uniform and dense coating layer can be formed on the surface of the silicon-carbon particle, thereby greatly reducing a risk that the silicon in the negative electrode material is oxidized to form high-valence silicon, and a silicon-carbon negative electrode material having high specific delithiated capacity and initial coulombic efficiency can be obtained.

In some implementations, in the step of treating the silicon-carbon particles, the mixed gas is fed to the silicon-carbon particles at the gas feeding amount of 0.5 L/min to 4 L/min under the condition that the temperature is 550 °C to 650 °C and the pressure is 0 kpa to 0.5 kpa. Therefore, a more uniform and denser coating layer can be formed, which is beneficial to obtaining a silicon-carbon negative electrode material having higher specific delithiated capacity and initial coulombic efficiency.

In some implementations, the mixed gas includes 10% by volume to 70% by volume of acetylene, 0% by volume to 20% by volume of methane, and 10% by volume to 90% by volume of inert gas, and optionally, includes 15% by volume to 60% by volume of acetylene, 5% by volume to 10% by volume of methane, and 30% by volume to 80% by volume of inert gas. Therefore, a decomposition rate can be controlled by using a particular mixed gas, so that the carbon slowly coats the surface of the particle, and the coating layer is denser.

In some implementations, the step of forming the silicon-carbon particles includes the following step: vacuumizing a reaction apparatus, and then feeding the inert gas. Therefore, the oxygen gas in the reaction apparatus can be excluded, thereby greatly reducing a risk that the silicon deposited in the negative electrode material is oxidized by the oxygen gas in the reaction apparatus to form high-valence silicon.

In some implementations, the step of forming the silicon-carbon particles includes the following step: heating the carbon skeleton having the pore structure to 400 °C to 550 °C in the reaction apparatus, to exclude oxygen gas from the carbon skeleton. Therefore, the oxygen gas adsorbed by the carbon skeleton itself can be excluded, thereby greatly reducing a risk that the silicon deposited in the negative electrode material is oxidized by the oxygen gas adsorbed by the carbon skeleton itself to form high-valence silicon.

In some implementations, the step of forming the silicon-carbon particles includes the following step: feeding a mixed gas of the silicon source gas and the inert gas into the reaction apparatus, and performing deposition at a temperature of 400 °C to 550 °C for 2 hours to 10 hours, to form the silicon-carbon particles. Therefore, the silicon can be uniformly deposited inside the porous carbon.

In some implementations, the silicon source gas is selected from one or more of silane, disilane, dichlorosilane, and trichlorosilane; and optionally, the silicon source gas is silane.

In some implementations, the inert gas is argon gas. Therefore, the silicon source gas is non-flammable and the silicon is not oxidized.

A third aspect of the present disclosure further provides a negative electrode plate, including the silicon-carbon negative electrode material of the first aspect of the present disclosure or a silicon-carbon negative electrode material prepared according to the second aspect of the present disclosure.

A fourth aspect of the present disclosure further provides a secondary battery, which includes the negative electrode plate according to the third aspect of the present disclosure. The secondary battery has excellent initial coulombic efficiency.

A fifth aspect of the present disclosure further provides a power consuming apparatus, which includes the secondary battery according to the fourth aspect of the present disclosure.

### BRIEF DESCRIPTION OF THE DRAWINGS

FIG. 1 shows a schematic diagram of a battery cell according to an example of the present disclosure.
FIG. 2 shows an exploded view of the battery cell according to an example of the present disclosure as shown in FIG. 1.
FIG. 3 is a schematic view of a battery module according to an example of the present disclosure.
FIG. 4 is a schematic view of a battery pack according to an example of the present disclosure.
FIG. 5 is an exploded view of the battery pack according to the example of the present disclosure as shown in FIG. 4.
FIG. 6 is a schematic view of a power consuming apparatus in which a secondary battery serves as a power source according to an example of the present disclosure.
FIG. 7 is an XPS diagram of analyzing a region formed by extending from a surface of a silicon-carbon negative electrode material according to example 1 of the present disclosure inward by 10 nm away from the surface.
FIG. 8 is an XPS diagram of analyzing a region formed by extending from a surface of a silicon-carbon negative electrode material according to comparative example 1 of the present disclosure inward by 10 nm away from the surface.

### Description of reference numerals:

1. battery pack; 2. upper box; 3. lower box; 4. battery module; 5. battery cell; 51. housing; 52. electrode assembly; and 53 cover plate.

### DETAILED DESCRIPTION

Examples of a silicon-carbon negative electrode material and a preparation method therefor specifically disclosed in the present disclosure will be described below in detail with appropriate reference to the accompanying drawings. However, there may be situations where unnecessary detailed illustrations are omitted. For example, there are cases in which detailed explanations of well-known matters and repeated explanations of actually the same structure are omitted. Thus, the following illustrations do not become unnecessarily lengthy, which facilitates understanding by those skilled in the art. In addition, the drawings and subsequent descriptions are provided for those skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or exclude end values, and may be arbitrarily combined, that is, any lower limit may be combined with any upper limit to form a new range. For example, if ranges of 60-120 and 80-110 are listed for a particular parameter, it is to be understood that ranges of 60-110 and 80-120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present disclosure, unless otherwise specified, the numerical value range "a-b" represents an abbreviated representation of any combination of real numbers between a and b, where a and b are both real numbers. For example, the numerical range "0 to 5" represents that all real numbers between 0 and 5 are listed herein, and "0 to 5" is merely the abbreviated representation of the combination of these numbers. In addition, when a parameter is expressed as an integer greater than or equal to 2, it is equivalent to disclosing that the parameter is an integer such as 2, 3, 4, 5, 6, 7, 8, 9, 10, 11, 12, or the like.

Unless otherwise specified, all examples and optional examples of the present disclosure may be combined with each other to form new technical solutions.

Unless otherwise specified, all technical features and optional technical features of the present disclosure may be combined with each other to form new technical solutions.

Unless otherwise specified, all the steps in the present disclosure can be carried out, either in order or randomly, preferably in order. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise stated, the terms used in the present disclosure have well-known meanings as commonly understood by those skilled in the art.

Unless otherwise stated, the values of the parameters mentioned in this application can be measured by various test methods commonly used in the art, for example, can be measured according to the test methods given in this application.

With the wide research of the silicon-carbon negative electrode materials, people put higher requirements on the performance of the silicon-carbon negative electrode materials. The inventor finds that an increase in a content of low-valence silicon in a silicon-carbon negative electrode material helps to improve a specific delithiated capacity of the silicon-carbon negative electrode material. However, the low-valence silicon in the current silicon-carbon negative electrode material is inevitably oxidized to form high-valence silicon, causing a reduction in the specific delithiated capacity and the initial coulombic efficiency of the silicon-carbon negative electrode material. In addition, the high-valence silicon easily forms an irreversible lithium-containing silicate with lithium ions, causing a reduction in a quantity of active lithium intercalated and deintercalated between a positive electrode piece and a negative electrode plate to and fro, causing a lithium loss, and resulting in a reduction in the specific discharge capacity and the initial coulombic efficiency of a secondary battery.

In view of this, the present disclosure provides a silicon-carbon negative electrode material, including a carbon skeleton having a pore structure and a silicon-based material arranged in the pore structure, where in a region formed by extending from a surface of the silicon-carbon negative electrode material inward by 10 nm away from the surface, a content of high-valence silicon is less than 25% relative to a total amount of low-valence silicon and the high-valence silicon, where the low-valence silicon is silicon with a valence of 0 to 2, and the high-valence silicon is silicon with a valence of 3 to 4.

In the silicon-carbon negative electrode material of the present disclosure, the content of high-valence silicon is suppressed to a low level, so that the content of low-valence silicon is greater than or equal to 75%, thereby improving the specific delithiated capacity and the initial coulombic efficiency of the negative electrode material. In addition, because the content of high-valence silicon is small, the formation of lithium-containing silicate is reduced, and a lithium loss is significantly reduced, thereby effectively improving the specific discharge capacity and the initial coulombic efficiency of a secondary battery.

In the present disclosure, the foregoing high-valence silicon and low-valence silicon may be quantified by using XPS. In an XPS diagram, a binding energy of the low-valence silicon is 98 to 102 eV, corresponding valence states are valence 0, valence 1, and valence 2, and an area (S1) bounded by a curve and a baseline is an atomic molar weight of the low-valence silicon; and a binding energy of the high-valence silicon is 102 eV to 106 eV, corresponding valence states are valence 3 and valence 4, and an area (S2) bounded by a curve and a baseline is an atomic molar weight of the high-valence silicon. Relative to the total amount of the low-valence silicon and the high-valence silicon, a content of the high-valence silicon = S2/(S1+S2) × 100%, and a content of the low-valence silicon = S1/(S1+S2) × 100%. The baseline is a connection line between two points on the test curve, and the two points are respectively X = 98 eV and X = 106 eV.

In some implementations, in the region formed by extending from the surface of the silicon-carbon negative electrode material inward by 10 nm away from the surface, a content (recorded as C₁₀) of the high-valence silicon is: 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2%, 1%, or the like, or a value within a range formed by any two values, but is not limited thereto. In some implementations, in the region formed by extending from the surface of the silicon-carbon negative electrode material inward by 10 nm away from the surface, C₁₀ is preferably less than or equal to 20%, and further C₁₀ is preferably less than or equal to 10%. A smaller content of the high-valence silicon in the region formed by extending from the surface of the silicon-carbon negative electrode material inward by 10 nm away from the surface indicates a higher content of low-valence silicon, and a higher specific delithiated capacity of the silicon-carbon negative electrode material. In addition, because the content of high-valence silicon is low, the formation of lithium-containing silicate is reduced, thereby greatly improving the specific discharge capacity and the initial coulombic efficiency of a secondary battery.

In some implementations, in a region formed from a distance of 10 nm away from the surface of the silicon-carbon negative electrode material to a distance of 20 nm away from the surface of the silicon-carbon negative electrode material, a content (recorded as C₂₀) of high-valence silicon is less than or equal to 20%. For example, the content of high-valence silicon is: 20%, 19%, 18%, 17%, 16%, 15%, 14%, 13%, 12%, 11%, 10%, 9%, 8%, 7%, 6%, 5%, 4%, 3%, 2%, 1%, or the like, or a value within a range formed by any two values, but is not limited thereto. In some implementations, in a region formed from a distance of 10 nm away from the surface of the silicon-carbon negative electrode material to a distance of 20 nm away from the surface of the silicon-carbon negative electrode material, C₂₀ is preferably less than 10%.

In some implementations, in a region formed from a distance of 20 nm away from the surface of the silicon-carbon negative electrode material to a distance of 30 nm away from the surface of the silicon-carbon negative electrode material, a content (recorded as C₃₀) of high-valence silicon is less than or equal to 10%. For example, the content (C₃₀) of high-valence silicon may be 10%, 9%, 8%, 7%, 6%, 5%, 4%, 3%, 2%, 1%, or the like, or a value within a range formed by any two values, but is not limited thereto. Preferably, in a region formed from a distance of 20 nm away from the surface of the silicon-carbon negative electrode material to a distance of 30 nm away from the surface of the silicon-carbon negative electrode material, C₃₀ is less than or equal to 5%.

For specific measurement methods for C₁₀, C₂₀, and C₃₀, refer to the records in the example parts.

In some implementations, the silicon-carbon negative electrode material satisfies at least one of the following conditions: (1) a volume distribution particle size Dv50 of the silicon-carbon negative electrode material is 5 µm to 10 µm, for example, may be 5 µm, 6 µm, 6.5 µm, 7 µm, 7.5 µm, 8 µm, 8.5 µm, or 9 µm, and is preferably 6 µm to 9 µm; (2) a specific surface area of the silicon-carbon negative electrode material is less than or equal to 5 m²/g, for example, may be 5 m²/g, 4 m²/g, 3 m²/g, 2 m²/g, 1.5 m²/g, or 1 m²/g, and is preferably less than or equal to 2 m²/g; (3) a powder compacted density of the silicon-carbon negative electrode material under a pressure of 3000 N is 0.8 g/cm³ to 1.2 g/cm³, for example, may be 0.8 g/cm³, 0.9 g/cm³, 0.95 g/cm³, 1.0 g/cm³, 1.1 g/cm³, 1.15 g/cm³, or 1.2 g/cm³, and is preferably 0.9 g/cm³ to 1.2 g/cm³; (4) a tapped density of the silicon-carbon negative electrode material is 0.9 g/cm³ to 1.1 g/cm³, for example, may be 0.9 g/cm³, 0.95 g/cm³, 1.0 g/cm³, 1.05 g/cm³, or 1.1 g/cm³, and is preferably 1.0 g/cm³ to 1.1 g/cm³; and (5) a specific delithiated capacity of the silicon-carbon negative electrode material is 800 mAh/g to 2500 mAh/g, for example, may be 800 mAh/g, 900 mAh/g, 1000 mAh/g, 1100 mAh/g, 1200 mAh/g, 1300 mAh/g, 1400 mAh/g, 1500 mAh/g, 1600 mAh/g, 1700 mAh/g, 1800 mAh/g, 1900 mAh/g, 2000 mAh/g, or 2100 mAh/g, and is preferably 1000 mAh/g to 2000 mAh/g. By causing the particle size, the compacted density, and the tapped density of the silicon-carbon negative electrode material to fall within the foregoing ranges, the compacted density of the electrode plate can be effectively increased, and the energy density of the cell can be increased. In addition, by causing the specific surface area to be less than 5 m²/g, the contact area between the particle and the electrolytic solution can be reduced as much as possible, and the initial coulombic efficiency, the cycle performance, and the storage performance can be improved.

In the present disclosure, the volume distribution particle size Dv50 of the material has a meaning pore known in the art and indicates the corresponding particle size at which the cumulative volume distribution percentage of the material reaches 50%, which can be measured by instruments and methods known in the art. For example, measurement can be made by using a laser particle size analyzer with reference to GB/T 19077-2016. The test instrument can be Model Mastersizer 3000 laser particle size analyzer of Malvern Instruments Inc., United Kingdom.

In the present disclosure, the specific surface area of the material has a meaning well-known in the art, and may be measured by using instruments and methods known in the art. For example, with reference to GB/T 19587-2017, a nitrogen adsorption specific surface area analysis test method may be used for testing, and a Brunauer Emmett Teller (BET) method is used for calculation. The test instrument may be a Tri-Star 3020 type specific surface area and pore size analysis tester available from Micromeritics company, the United States.

In the present disclosure, the powder compacted density of the material has a meaning well-known in the art, and may be measured by using instruments and methods known in the art. For example, measurement can be made by using an electronic pressure testing machine (which may be, for example, a UTM7305 electronic pressure testing machine) with reference to the standard GB/T 24533-2009. An exemplary test method is as follows: 1 g of sample powder is weighed and added to a die having a bottom area of 1.327 cm², is pressurized to 300 kg and held for 30s, and then is depressurized and held for 10s. Then, a powder compacted density of a material under a pressure of 3000 N is recorded and calculated.

In the present disclosure, the tapped density of the material has a meaning well-known in the art, and may be measured by using instruments and methods known in the art. For example, measurement can be made by using a powder tapped density tester with reference to GB/T 5162-2006. The test instrument may be Dandong Bettersize BT-301, and the test parameters are as follows: vibration frequency 250 ± 15 times/minute, amplitude 3 ± 0.2 mm, vibration count 5000, and graduated cylinder 25 mL.

In the present disclosure, the specific delithiated capacity of the material has a meaning well-known in the art, and may be measured using a method known in the art. For a specific test method, refer to records in the examples.

In some implementations, a pore volume of the carbon skeleton is 0.4 cm³/g to 1.5 cm³/g, optionally 0.6 cm³/g to 1.2 cm³/g; and/or a volume proportion of micropores whose pore diameters are less than 2 nm relative to the pore volume is greater than or equal to 60%, and optionally, greater than or equal to 80%. Therefore, the silicon-based material is mainly deposited in the micropores. A higher micropore proportion indicates a larger quantity of silicon-based materials to be deposited, and a corresponding higher specific delithiated capacity. In some implementations, the foregoing silicon-based material may be amorphous hard carbon.

In some implementations, the surface of the silicon-carbon negative electrode material has a coating layer; and optionally, the coating layer is a carbon coating layer. In the present disclosure, by disposing a uniform and dense coating layer, oxygen gas in the air can be further prevented from entering the negative electrode material, thereby greatly reducing a risk that the silicon in the silicon-carbon negative electrode material is oxidized to form high-valence silicon, and reducing a content of high-valence silicon in the silicon-carbon negative electrode material.

In addition, the present disclosure provides a preparation method for the foregoing silicon-carbon negative electrode material. The preparation method includes a step of forming silicon-carbon particles (step (a)), where the carbon skeleton having the pore structure is allowed to react with a silicon source gas to form silicon-carbon particles having the silicon-based material in the pore structure; and a step of treating the silicon-carbon particles (step (b)), where a mixed gas including a carbon source gas and an inert gas is fed to the silicon-carbon particles at a gas feeding amount greater than 0 L/min and less than or equal to 10 L/min under a condition that a temperature is 500 °C to 700 °C and a pressure is 0 kpa to 1 kpa, and the carbon source gas is selected from at least one of ethane, ethylene, acetylene, and methane.

Therefore, by using a specific temperature, pressure, gas feeding amount, and mixed gas, the decomposition rate of the carbon source gas can be effectively controlled, facilitating formation of a uniform and dense coating layer on the surface of the silicon-carbon particle. Therefore, a risk that the silicon in the silicon-carbon particle is oxidized by oxygen gas in the air to form high-valence silicon can be effectively reduced, and a content of high-valence silicon in the particle is reduced, so that C₁₀, C₂₀, and C₃₀ fall within the foregoing ranges. By selecting the foregoing carbon source gas, coating can be uniform and complete.

In some implementations, in step (b), the temperature may be, for example, 500 °C, 550 °C, 600 °C, 650 °C, 700 °C, or a value within a range formed by any two of these values. The pressure may be, for example, 0 kpa, 50 Pa, 100 Pa, 150 Pa, 200 Pa, 250 Pa, 300 Pa, 350 Pa, 400 Pa, 450 Pa, 500 Pa, 550 Pa, 600 Pa, 650 Pa, 700 Pa, 750 kPa, 800 Pa, 850 Pa, 900 Pa, 950 Pa, 1000 Pa (1 kpa), or a value within a range formed by any two of these values. By controlling the temperature and the pressure to fall within the foregoing ranges, the decomposition rate of the carbon source gas can be effectively controlled, facilitating formation of a uniform and dense coating layer.

In some implementations, in step (b), the gas feeding amount may be, for example, 0.5 L/min, 1.0 L/min, 1.5 L/min, 2.0 L/min, 2.5 L/min, 3.0 L/min, 3.5 L/min, 4.0 L/min, 4.5 L/min, 5.0 L/min, 5.5 L/min, 6.0 L/min, 6.5 L/min, 7.0 L/min, 7.5 L/min, 8.0 L/min, 8.5 L/min, 9.0 L/min, 9.5 L/min, 10.0 L/min, or a value within a range formed by any two of these values. By controlling the gas feeding amount to fall within the foregoing range, the carbon source gas can fully react, thereby improving the utilization rate of the carbon source gas, and facilitating formation of a uniform and dense coating layer.

In some implementations, in step (b), preferably, the foregoing mixed gas is fed at the gas feeding amount of 0.5 L/min to 4 L/min under the condition that the temperature is 550 °C to 650 °C and the pressure is 0 kpa to 500 pa. Under the foregoing condition, a denser coating layer can be formed, so as to further reduce the possibility that the oxygen gas in the air enters the particle to oxidize the silicon, and C₁₀, C₂₀, and C₃₀ can be further reduced.

In some implementations, preferably, the foregoing mixed gas includes 10% to 70% of acetylene, 0% to 20% of methane, and 10% to 90% of inert gas. Further preferably, the foregoing mixed gas includes 15% to 60% of acetylene, 5% to 10% of methane, and 30% to 80% of inert gas. The decomposition temperature of the acetylene is low and the acetylene decomposes rapidly. The decomposition rate of the acetylene can be controlled by adding a certain amount of methane, so that the carbon slowly coats the surface of the particle, and the coating layer becomes dense.

The inert gas is a gas that does not react with the silicon material. For example, the inert gas includes, but is not limited to: helium gas, neon gas, argon gas, krypton gas, xenon gas, and radon gas. Formation of Si₃N₄ can be reduced by using the inert gas as a protective gas.

In some implementations, step (a) may include the following step (a 1) to step (a3).

Step (a1): Heat the carbon skeleton having the pore structure to 400 °C to 550 °C in the reaction apparatus, to exclude oxygen gas from the carbon skeleton.

The foregoing reaction apparatus is not specifically limited, and may be an apparatus commonly used in the art, for example, may be a device such as an intermediate frequency furnace, a roller hearth furnace, a rotary kiln, a pusher kiln, a vertical granulation kettle, a horizontal granulation kettle, a vertical reaction kettle, a horizontal reaction kettle, or a rotary drum furnace.

In step (a1), the foregoing carbon skeleton is heated to 400 °C to 550 °C, for example, may be heated to: 400 °C, 410 °C, 420 °C, 430 °C, 440 °C, 450 °C, 460 °C, 470 °C, 480 °C, 490 °C, 500 °C, 510 °C, 520 °C, 530 °C, 540 °C, 550 °C, or a value within a range formed by any two values, but is not limited thereto. Preferably, the foregoing carbon skeleton is heated to 450 °C to 550 °C. By heating the foregoing carbon skeleton to the foregoing range, the oxygen gas adsorbed by the carbon skeleton itself can be excluded, thereby greatly reducing a risk that the silicon deposited in the negative electrode material is oxidized by the oxygen gas adsorbed by the carbon skeleton itself to form high-valence silicon, so that the content of low-valence silicon in the silicon-carbon negative electrode material is kept at a high level, which helps to reduce the content of high-valence silicon, and causes C₁₀, C₂₀, and C₃₀ to fall within the foregoing ranges, to obtain a silicon-carbon negative electrode material having a high specific delithiated capacity.

Step (a2): Vacuumize a reaction apparatus, and then feed the inert gas.

Through this step, the oxygen gas in the reaction apparatus can be excluded, thereby greatly reducing a risk that the silicon deposited in the negative electrode material is oxidized by the oxygen gas in the reaction apparatus to form high-valence silicon, to help to keep the content of low-valence silicon in the silicon-carbon negative electrode material at a high level, and help to reduce the content of high-valence silicon, and causes C₁₀, C₂₀, and C₃₀ to fall within the foregoing ranges.

In some implementations, through vacuumization, a vacuum degree in the reaction apparatus is 1 × 10⁻³ Pa to 1 × 10⁻⁶ Pa, for example, may be 1 × 10⁻⁵ Pa. A smaller pressure value in the reaction apparatus indicates a smaller residual amount of oxygen gas in the reaction apparatus, and a lower content of high-valence silicon in the prepared silicon-carbon negative electrode material.

In some implementations, in step (a2), after the pressure value in the reaction apparatus reaches the foregoing pressure value and is held for the foregoing time, an inert gas is fed into the reaction apparatus, so as to further reduce the residual amount of oxygen gas in the reaction apparatus.

In some implementations, the foregoing step (a2) (vacuumization, holding, and feeding of an inert gas) may be repeatedly performed in a cyclic manner. A quantity of times of performing this step includes, but is not limited to: 1, 2, and 3.

In some implementations, in step (a2), the oxygen content of the tail gas excluded from the reaction apparatus may be detected according to a set frequency. Step (a2) is stopped from being performed when the oxygen content of the tail gas is less than 200 ppm. Enumerably, step (a2) may be stopped from being performed when the oxygen content of the tail gas is 0 ppm, 20 ppm, 40 ppm, 60 ppm, 80 ppm, 100 ppm, 120 ppm, 140 ppm, 160 ppm, 180 ppm, or 190 ppm, or falls within a range formed by any two of these values.

A sequence of step (a1) and step (a2) is not specifically limited. Step (a1) may be first performed and then step (a2) is performed, or step (a2) may be first performed and then step (a1) is performed. Through the two steps, oxygen contained in the raw materials and the reaction apparatus is excluded to the greatest extent.

Step (a3): Feed a mixed gas of the silicon source gas and the inert gas into the reaction apparatus, and perform deposition at a temperature of 400 °C to 550 °C for 2 hours to 10 hours, to form the silicon-carbon particles.

The foregoing silicon source gas includes a gas that can provide a silicon atom, and may be, for example, one or more of silane, disilane, dichlorosilane, and trichlorosilane. And optionally, the silicon source gas is silane. The definition of the inert gas used in this step is the same as that of the inert gas in the foregoing step (b), and preferably, the argon gas is used.

In some implementations, a rotary kiln is used as the reaction apparatus. The mixed gas of silane and argon gas is fed into the rotary kiln at a gas feeding amount of 0.1 L/min to 4 L/min, and a reaction is performed under a condition of a slight positive pressure of 0 to 0.5 kPa and a rotation frequency of 0 Hz to 80 Hz. The rotation frequency of the reaction apparatus may be: 0 Hz, 5 Hz, 10 Hz, 20 Hz, 30 Hz, 40 Hz, 50 Hz, 60 Hz, 70 Hz, or 80 Hz, or fall within a range formed by any two of these values. By causing the rotation frequency to fall within the foregoing range, the powder can rotate fully in the kiln, contact between the powder and the gas is enhanced, and the powder and the gas react fully.

Step (a3) is performed after step (a1) and step (a2). Because the oxygen gas contained in the reaction material and the reaction apparatus is excluded through step (a1) and step (a2), the risk that the silicon deposited in step (a3) is oxidized can be greatly reduced.

In addition, the present disclosure provides a negative electrode plate, including a negative electrode current collector and a negative electrode film layer arranged on at least one surface of the negative electrode current collector, and the negative electrode film layer includes a negative electrode active material. The negative electrode active material includes the silicon-carbon negative electrode material of the present disclosure or a silicon-carbon negative electrode material prepared according to the preparation method of the present disclosure.

In an example, the negative electrode current collector has two opposite surfaces in a thickness direction of the negative electrode current collector, and the negative electrode film layer is disposed on either or both of the two opposite surfaces of the negative electrode current collector.

In some implementations, the negative electrode current collector may be a metal foil or a composite current collector. For example, as the metal foil, a copper foil may be used. The composite current collector may include a polymer material undercoating and a metal layer formed on at least one surface of a polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

In some implementations, the negative electrode film layer optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer optionally includes another adjuvant such as a thickener (for example, sodium carboxymethyl cellulose (CMC-Na)).

In some implementations, the negative electrode plate may be prepared in the following manner: dispersing the foregoing components for preparing the negative electrode plate, for example, the negative electrode active material, the conductive agent, the binder, and any other components, in a solvent (for example deionized water) to form a negative electrode slurry; and coating the negative electrode slurry on the negative electrode current collector, followed by processes such as drying and cold pressing, to obtain the negative electrode plate.

In addition, the secondary battery and power consuming apparatus of the present disclosure are described below with appropriate reference to the accompanying drawings.

An example of the present disclosure provides a secondary battery.

The term "secondary battery" mentioned herein refers to a battery cell, a battery module, or a battery pack. Descriptions are separately provided below.

Generally, the secondary battery cell includes a positive electrode plate, a negative electrode plate, an electrolyte, and a separator. During the charging and discharging process of the battery, active ions are intercalated and deintercalated back and forth between the positive electrode plate and the negative electrode plate. An electrolyte achieves an ion conducting effect between the positive electrode plate and the negative electrode plate. The separator is disposed between the positive electrode plate and the negative electrode plate to mainly play a role in preventing a short circuit between a positive electrode and a negative electrode while allowing ions to pass through.

### [Positive electrode plate]

The positive electrode plate includes a positive electrode current collector and a positive electrode film layer arranged on at least one surface of the positive electrode current collector, and the positive electrode film layer includes the positive electrode active material of the first aspect of the present disclosure.

In an example, the positive electrode current collector has two opposite surfaces in a thickness direction of the positive electrode current collector, and the positive electrode film layer is disposed on either or both of the two opposite surfaces of the positive electrode current collector.

In some implementations, the positive electrode current collector may be a metal foil or a composite current collector. For example, as the metal foil, an aluminum foil may be used. The composite current collector may include a polymer material base layer or a metal layer located on at least one surface of the polymer material base layer. The composite current collector may be formed by forming a metal material (aluminum, an aluminum alloy, nickel, a nickel alloy, titanium, a titanium alloy, silver, a silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, when the battery cell is a lithium-ion battery, the positive electrode active material may be a positive electrode active material well-known in the art for lithium-ion batteries. For example, the positive electrode active material may include at least one of the following materials: a lithium-containing phosphate with an olivine structure, a lithium transition metal oxide, and respective modified compounds thereof. However, the present disclosure is not limited to these materials. Other traditional materials that can be used as positive electrode active materials for batteries may alternatively be used. These positive electrode active materials may be used alone or in combination of two or more. Examples of lithium transition metal oxides can include, but are not limited to, at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (for example, LiNi_{0.85}Co_{0.15}Al_{0.05}O₂), modified compounds thereof, etc. Examples of the lithium-containing phosphate of the olivine structure may include, but are not limited to, at least one of lithium iron phosphate (for example, LiFePO₄ (or briefly referred to as LFP)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon.

In some implementations, the positive electrode film layer optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some implementations, the positive electrode film layer optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared as follows: dispersing the above components for preparing the positive electrode plate, for example, the positive electrode active material, the conductive agent, the binder, and any other components, in a solvent (for example N-methylpyrrolidone) to form a positive electrode slurry; and coating the positive electrode slurry onto a positive electrode current collector, followed by processes such as drying and cold pressing, to obtain the positive electrode plate.

### [Electrolyte]

An electrolyte achieves an ion conducting effect between the positive electrode plate and the negative electrode plate. The type of the electrolyte is not specifically limited in the present disclosure and can be selected according to requirements. For example, the electrolyte can be liquid, gelled, or all solid.

In some implementations, the electrolyte is an electrolytic solution. The electrolytic solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfoxide, and diethyl sulfone.

In some implementations, the electrolytic solution may optionally include additives. For example, the additive may include a negative electrode film forming additive, a positive electrode film forming additive, and may further include an additive that can improve particular battery performance, for example, an additive that improves battery overcharging performance, or an additive that improves high-temperature or low-temperature performance of the battery.

### [Separator]

The type of the separator is not particularly limited in the present disclosure, and any well-known separator with a porous structure having good chemical stability and mechanical stability can be selected.

In some implementations, a material of the separator may be selected from at least one of glass fiber, non-woven fabric, polyethylene, polypropylene, and polyvinylidene fluoride. The separator can be either a single-layer thin film or a multi-layer composite thin film without special limitations. When the separator is a multi-layer composite thin film, the materials of the layers can be the same or different without special limitations.

In some implementations, an electrode assembly may be manufactured by a positive electrode plate, a negative electrode plate, and a separator by a winding process or a laminating process.

In some implementations, the battery cell may include an outer packaging. The outer package can be used to encapsulate the above electrode assembly and electrolyte.

In some implementations, the outer packaging of the battery cell may be a hard shell such as a hard plastic shell, an aluminum shell, or a steel shell. Alternatively, the outer packaging of the battery cell may be a soft package such as a pouch-type soft package. A material of the soft package may be plastic, and examples of the plastic may include polypropylene, polybutylene terephthalate, and polybutylene succinate.

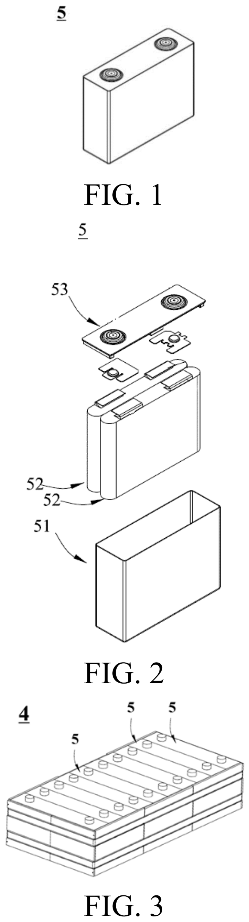

The shape of the battery cell is not particularly limited in the present disclosure, and the secondary battery can be cylindrical, prismatic, or in any other shape. FIG. 1 shows a prismatic battery cell 5 as an example.

In some implementations, referring to FIG. 2, the outer package can include a housing 51 and a top cover assembly 53. The housing 51 may include a bottom plate and a side plate connected to the bottom plate. The bottom plate and the side plate enclose an accommodating cavity. The housing 51 has an opening in communication with the accommodating cavity, and the top cover assembly 53 can cover the opening to close the accommodating cavity. The positive electrode plate, the negative electrode plate, and the separator may be made into an electrode assembly 52 by a winding process or a laminating process. The electrode assembly 52 is packaged in the accommodating cavity. The electrolyte solution infiltrates into the electrode assembly 52. The number of electrode assemblies 52 contained in the battery cell 5 can be one or more and can be selected by those skilled in the art according to specific actual requirements.

In some implementations, the battery cell can be assembled into a battery module, the number of battery cells contained in the battery module can be one or more, and the specific number can be selected by those skilled in the art according to the application and capacity of the battery module.

FIG. 3 shows a battery module 4 as an example. Referring to FIG. 3, in the battery module 4, a plurality of battery cells 5 may be sequentially disposed in the length direction of the battery module 4. Certainly, the plurality of battery cells may alternatively be arranged in any other manner. The plurality of battery cells 5 can be further fixed by fasteners.

And optionally, the battery module 4 may further include a shell having an accommodating space, in which the plurality of battery cells 5 are accommodated.

In some implementations, the battery module may further be assembled into a battery pack, the quantity of battery module included in the battery pack may be one or more, and the specific quantity may be selected by those skilled in the art according to the application and capacity of the battery pack.

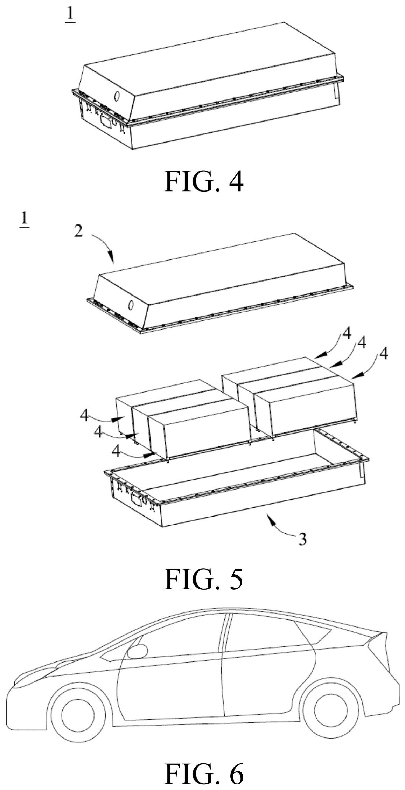

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 can cover the lower box 3 to form a closed space for accommodating the battery modules 4. The plurality of battery modules 4 may be arranged in the battery box in any way.

In addition, the present disclosure further provides a power consuming apparatus. The power consuming apparatus includes the secondary battery provided by the present disclosure. The secondary battery can be used as a power supply of the power consuming apparatus, and can also be used as an energy storage unit of the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

The battery cell, the battery module, or the battery pack may be selected according to use requirements of the power consuming apparatus.

FIG. 6 show a power consuming apparatus as an example. The power consuming apparatus is an all-electric vehicle, a hybrid electric vehicle, a plug-in hybrid electric vehicle, or the like. To satisfy the need of the power consuming apparatus for a high power and high energy density of secondary batteries, a battery pack or a battery module can be used.

The apparatus as another example may be a mobile phone, a tablet computer, a laptop, and the like. The apparatus usually needs to be light and thin, and the battery cell may be used as a power source.

### Examples

Examples of the present disclosure are described below. The examples described below are illustrative, are merely used to explain the present disclosure, and should not be construed as a limitation to the present disclosure. Where no specific technologies or conditions are indicated in the examples, the technologies or conditions described in the literatures in the art or the instructions for the product are followed. The reagents or instruments without manufacturer indicated are all conventional products that may be purchased in the market.

### Example 1

### Preparation of a silicon-carbon negative electrode material

Step (a1): Weigh 500 g of porous carbon and place the porous carbon into a rotary kiln, heat the porous carbon to 500 °C (T1) under an argon gas protection condition, and hold the temperature for 2 h, so as to desorb air adsorbed in the porous carbon.

Step (a2): Vacuumize the rotary kiln to a vacuum degree of 1 × 10⁻⁵ Pa, and feed argon gas after the pressure is held for 5 min. The steps of vacuumization and argon gas feeding are repeated until the content of oxygen gas in the tail gas is less than 200 ppm.

Step (a3): Feed a mixed gas of silane and argon gas (a volume ratio of silane to argon gas is 1:4) into the rotary kiln with a gas feeding amount of 4 L/min, hold a micro-positive pressure of 200 Pa, and rotate the rotary kiln at a rotation frequency of 40 Hz, to obtain silicon-carbon particles.

Step (b): Increase the temperature of the rotary kiln to 500 °C (T2), feed a mixed gas of acetylene, methane, and argon gas under a pressure (P) of 0.2 kpa and with a gas feeding amount (V) of 3 L/min, rotate the rotary kiln at a rotation frequency of 40 Hz, and coat the foregoing silicon-carbon particles.

Then, the coated silicon-carbon particles are filtered through a 200-mesh screen after natural cooling, to obtain a silicon-carbon negative electrode material.

### Measurement of contents C₁₀, C₂₀, and C₃₀ of high-valence silicon in the silicon-carbon negative electrode material

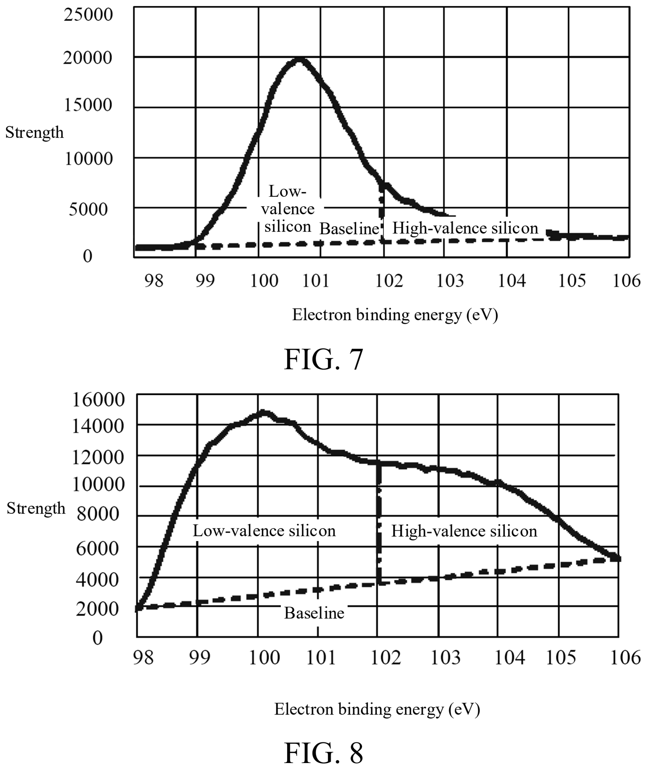

(1) X-rays are used as an excitation source to act on a surface of the silicon-carbon negative electrode material, and a region from the surface to a depth of 10 nm is detected, to obtain an XPS diagram shown in FIG. 7. An area S1 bounded by a curve corresponding to a binding energy of 98 to 102 eV and a baseline is an amount of low-valence silicon. An area S2 bounded by a curve corresponding to a binding energy of 102 eV to 106 eV and the baseline is an amount of high-valence silicon. The content C₁₀ of high-valence silicon is calculated based on S2/(S1+S2) and is 17.5%.
(2) The surface of the silicon-carbon negative electrode material in (1) is etched by using an argon ion gun, an etching speed is about 4 nm/min, and the analysis region (that is, the region from the surface to the depth of 10 nm) in (1) is etched away by regulating an etching time of 2.5 min. Then, X-rays are used as an excitation source to act on a new surface of the foregoing etched silicon-carbon negative electrode material, distribution information of photoelectronic information is acquired for a location having a depth of 10 nm, and silicon valance information of a region formed from a location 10 nm away from the surface to a location 20 nm away from the surface is obtained according to the same method as that in (1), and C₂₀ is 9.6%.
(3) The surface of the silicon-carbon negative electrode material in (2) is further etched by using the argon ion gun, an etching speed is about 4 nm/min, and the analysis region in (2) is etched away by regulating an etching time of 2.5 min. Then, X-rays are used as an excitation source to act on a new surface of the etched silicon-carbon negative electrode material, distribution information of photoelectronic information is acquired for a location having a depth of 10 nm, and silicon valance information of a region formed from a location 20 nm away from the surface to a location 30 nm away from the surface is obtained according to the same method as that in (1), and C₃₀ is 4.2%.

### Preparation of secondary battery

### (a) Preparation of negative electrode plate

The foregoing obtained silicon-carbon composite material, conductive carbon black, a sodium carboxymethyl cellulose (CMC) thickener, a styrene-butadiene rubber emulsion (SBR) binder were fully stirred and mixed in an appropriate amount of deionized water at a mass ratio of 96.5:1.0:1.0:1.5, to form a homogeneous negative electrode slurry. The negative electrode slurry was coated on a negative electrode current collector, followed by processes such as drying, to obtain the negative electrode plate.

### (b) Preparation of positive electrode plate

An aluminum foil with a thickness of 8 µm was used as a positive electrode current collector. A positive electrode active material LiNi_{0.8}Co_{0.1}Mn_{0.1}O₂ (NCM811), an acetylene black conductive agent, a polyvinylidene fluoride (PVDF) binder were dissolved in an N-methylpyrrolidone (NMP) solvent at a mass ratio of 93:2:5, and fully stirred for uniform mixing, to obtain a positive electrode slurry. Then, the positive electrode slurry was uniformly coated on the positive electrode current collector, followed by drying, cold pressing, and slitting, to obtain the positive electrode plate.

### (c) Preparation of electrolytic solution

An electrolytic solution was a mixed solution containing ethylene carbonate (EC), ethyl methyl carbonate (EMC) and diethyl carbonate (DEC), in which the volume ratio of EC to EMC to DEC was 20:20:60. LiPF₆ was then dissolved in the foregoing organic solvent, followed by addition of an additive fluoroethylene carbonate (FEC). The concentration of LiPF₆ was 1 mol/L, and the mass percentage of FEC in the electrolyte solution was 5%.

### (d) Preparation of battery

The positive electrode plate, the separator, and the negative electrode plate were sequentially stacked, so that the separator was located between the positive electrode plate and the negative electrode plate to separate the positive electrode plate from the negative electrode plate, wound to obtain a bare cell, and welded the bare cell with tabs. The bare cell was packed into an aluminum shell and baked at 80°C to remove water, and the electrolyte solution was injected into the aluminum shell and sealed, to obtain an uncharged battery. The uncharged battery then sequentially undergone processes such as standing, hot and cold pressing, formation, shaping, capacity testing, to obtain a lithium-ion secondary battery in Example 1.

### Examples 2 to 5 and Comparative Examples 1 to 2

The temperature (T2) in step (b) is changed according to what are shown in the following Table 1. In addition, the silicon-carbon negative electrode material is prepared the same as in Example 1, and C₁₀, C₂₀, and C₃₀ are measured, so as to prepare a secondary battery.

For the silicon-carbon negative electrode material of comparative example 1, X-rays are used as an excitation source to act on a surface of the silicon-carbon negative electrode material, and a region from the surface to a depth of 10 nm is detected, to obtain an XPS diagram shown in FIG. 8. Calculation is performed the same as that in Example 1, and a content C₁₀ of high-valence silicon is 30.3%.

The following performance tests are performed for the foregoing examples and comparative examples.

### <Performance test>

(1) Specific delithiated capacity and initial coulombic efficiency of a silicon-carbon negative electrode material
   a. Preparation of a button battery: The foregoing silicon-carbon negative electrode material, conductive carbon black, and a binder polyacrylic acid were mixed at a mass ratio of 8:1:1, then a solvent deionized water was added, and mixing is performed with a high-speed mixer until the system is uniform, to obtain a negative electrode paste having a solid content of 45%; and the negative electrode slurry was uniformly applied to a copper foil, which acted as a negative electrode current collector and dried at 85°C, followed by cold pressing, to obtain an electrode plate. The button battery was assembled by using metal lithium as a counterelectrode, using a Celgard 2400 separator, and injecting an electrolytic solution. An electrolytic solution was a mixed solution containing ethylene carbonate (EC), ethyl methyl carbonate (EMC) and diethyl carbonate (DEC), in which the volume ratio of EC to EMC to DEC was 20:20:60. LiPF₆ was then dissolved in the foregoing organic solvent, followed by addition of an additive fluoroethylene carbonate (FEC). The concentration of LiPF₆ was 1 mol/L, and the mass percentage of FEC in the electrolyte solution was 5%.
   b. Test procedure of the button battery: After standing for 60 min, the assembled button battery was tested by using a procedure in which the assembled button battery was discharged to 5 mV with a 0.05 C constant current, was discharged to 5 mV with 50 µA, stood for 10 min, and was charged to 2.0 V with 0.1 C, where the specific lithiated capacity of the silicon-carbon negative electrode material was a specific capacity C1 for discharging to 5 mV, the specific delithiated capacity of the silicon-carbon negative electrode material was a specific capacity C2 for charging to 2.0 V, and initial coulombic efficiency of the silicon-carbon negative electrode material was C2/C1.
(2) Specific discharge capacity and initial coulombic efficiency of secondary battery

After the secondary battery obtained in the foregoing examples and the comparative examples was held at 25 °C for 60 min, the secondary battery was charged to 4.25 V by using a constant current of 0.1 C, and was charged to 0.05 C by using a constant voltage of 4.25 V, and a specific charge capacity at this time was recorded as Q1; and the secondary battery was allowed to stand for 10 min, was discharged to 2.5 V by using a constant current of 0.1 C, and was discharged to 0.05 C by using a constant voltage of 2.5 V, a specific discharge capacity at this time was recorded as Q2, and initial coulombic efficiency of the secondary battery was Q2/Q1.

**Table 1**

| | Step (b) | | | | XPS test | | | Silicon-carbon negative electrode material | | Secondary battery | |
|---|---|---|---|---|---|---|---|---|---|---|---|
| | T2 (°C) | P (Kpa) | V (L/ min) | Mixed gas volume ratio | C₁₀ (%) | C₂₀ (%) | C₃₀ (%) | Specific delithiated capacity (mAh/g) | Initial coulombic efficiency (%) | Specific discharge capacity (mAh/g) | Initial coulombic efficiency (%) |
| Example 1 | 500 | 0.2 | 3 | 2:1:7 | 21.3 | 13.2 | 5.8 | 1895 | 89.59 | 197.3 | 85.78 |
| Example 2 | 550 | 0.2 | 3 | 2:1:7 | 16.3 | 8.8 | 3.5 | 1977 | 93.47 | 203.2 | 88.35 |
| Example 3 | 600 | 0.2 | 3 | 2:1:7 | 15.2 | 7.4 | 2.9 | 1984 | 93.80 | 205.6 | 89.39 |
| Example 4 | 650 | 0.2 | 3 | 2:1:7 | 16.8 | 8.5 | 3.7 | 1972 | 93.23 | 203 | 88.26 |
| Example 5 | 700 | 0.2 | 3 | 2:1:7 | 22.5 | 14.6 | 9.8 | 1863 | 88.08 | 193.7 | 84.22 |
| Comparative Example 1 | 200 | 0.2 | 3 | 2:1:7 | 30.3 | 21.9 | 13.2 | 1766 | 83.49 | 181.8 | 79.04 |
| Comparative Example 2 | 1000 | 0.2 | 3 | 2:1:7 | 59.1 | 43.9 | 30.8 | 1440 | 68.08 | 143.0 | 62.17 |

| | | | | | | | | | | | |
|---|---|---|---|---|---|---|---|---|---|---|---|
| Notes: The volume ratio of the mixed gas in Table 1 is a volume ratio of acetylene, methane, and argon gas. | | | | | | | | | | | |

It can be known from the results of Table 1 that, in step (b), the temperature, the pressure, the gas feeding amount, and the mixed gas of the rotary kiln are caused to satisfy particular conditions, so that a silicon-carbon negative electrode material having C₁₀ of less than 25% can be obtained. Examples 1 to 5 show that the temperature of the rotary kiln is controlled to range from 500 °C to 700 °C, the obtained silicon-carbon negative electrode material has a low content of high-valence silicon, and C₁₀ is always less than 25%. The specific delithiated capacity and the initial coulombic efficiency of the silicon-carbon negative electrode material are high, and the specific discharge capacity and the initial coulombic efficiency of the obtained secondary battery are high. Particularly, when the temperature of the rotary kiln is controlled to range from 550 °C to 650 °C, C₁₀ of the obtained silicon-carbon negative electrode material is further reduced, and is always less than 20%. In addition, C₂₀ and C₃₀ are also further reduced, and the performance of the secondary battery is better.

Compared with Examples 1 to 5, in the comparative example 1 and the comparative example 2, if the temperature in the rotary kiln is excessively low (200 °C) or excessively high (1000 °C), C₁₀ of the silicon-carbon negative electrode material is greater than 30%, and the technical effect of the present disclosure cannot be achieved.

### Examples 6 to 8 and Comparative Example 3

The pressure (P) in step (b) is changed according to what are shown in the following Table 2. In addition, the silicon-carbon negative electrode material is prepared the same as in Example 3, and C₁₀, C₂₀, and C₃₀ are measured, so as to prepare a secondary battery.

Performance evaluation is performed the same as that in Example 3, and details are shown in Table 2.

**Table 2**

| | Step (b) | XPS test | | | Silicon-carbon negative electrode material | | Secondary battery | |
|---|---|---|---|---|---|---|---|---|
| | P (Kpa) | C₁₀ (%) | C₂₀ (%) | C₃₀ (%) | Specific delithiated capacity (mAh/g) | Initial coulombic efficiency (%) | Specific discharge capacity (mAh/g) | Initial coulombic efficiency (%) |
| Example 6 | 0 | 16.3 | 7.9 | 2.9 | 1970 | 93.14 | 204.5 | 88.91 |
| Example 7 | 0.5 | 17.1 | 9.3 | 4 | 1958 | 92.57 | 202.4 | 88.00 |
| Example 8 | 1 | 24.8 | 10.2 | 5.3 | 1900 | 89.83 | 197.9 | 86.04 |
| Comparative Example 3 | 5 | 26.9 | 20.2 | 10.4 | 1803 | 85.24 | 186.3 | 81.00 |

It can be known from the results in Table 2 that, by controlling the pressure of the rotary kiln to fall within the range of 0 kpa to 1 kpa in step (b), the obtained silicon-carbon negative electrode material has a low content of high-valence silicon, and C₁₀ is always less than 25%. Particularly, when the pressure of the rotary kiln is controlled to fall within the range of 0 kpa to 0.5 kpa, C₁₀ of the obtained silicon-carbon negative electrode material is further reduced, and is less than 20%. In addition, C₂₀ and C₃₀ are also further reduced. The specific delithiated capacity and the initial coulombic efficiency of the silicon-carbon negative electrode material are high, and the specific discharge capacity and the initial coulombic efficiency of the obtained secondary battery are high.

In the comparative example 3, if the pressure in the rotary kiln is excessively high (5 kpa), C₁₀ of the silicon-carbon negative electrode material is greater than 25%, and the technical effect of the present disclosure cannot be achieved.

### Examples 9 to 11 and Comparative Examples 4 and 5

The gas feeding amount (V) in step (b) is changed according to what are shown in the following Table 3. In addition, the silicon-carbon negative electrode material is prepared the same as in Example 3, and C₁₀, C₂₀, and C₃₀ are measured, so as to prepare a secondary battery.

Performance evaluation is performed the same as that in Example 3, and details are shown in Table 3.

**Table 3**

| | Step (b) | XPS test | | | Silicon-carbon negative electrode material | | Secondary battery | |
|---|---|---|---|---|---|---|---|---|
| | V (L/min) | C₁₀ (%) | C₂₀ (%) | C₃₀ (%) | Specific delithiated capacity (mAh/g) | Initial coulombic efficiency (%) | Specific discharge capacity (mAh/g) | Initial coulombic efficiency (%) |
| Example 9 | 0.5 | 19 | 10.3 | 6.8 | 1923 | 90.92 | 199.1 | 86.57 |
| Example 10 | 4 | 15.4 | 7.8 | 3.4 | 1980 | 93.61 | 205.4 | 89.30 |
| Example 11 | 10 | 20.5 | 10.5 | 7.3 | 1905 | 90.07 | 198.5 | 86.30 |
| Comparative Example 4 | 20 | 30.4 | 20.1 | 10.3 | 1792 | 84.72 | 185.1 | 80.48 |
| Comparative Example 5 | 0 | 35.7 | 20.3 | 12.8 | 1743 | 82.41 | 179.9 | 78.22 |

It can be known from the results in Table 3 that, by controlling the gas feeding amount (V) of the rotary kiln to fall within a range greater than 0 L/min and less than or equal to 10 L/min in step (b), the obtained silicon-carbon negative electrode material has a low content of high-valence silicon, and C₁₀ is less than 25%. In the comparative examples 4 and 5, the technical effect of the present disclosure cannot be achieved when the gas feeding amount is excessively high or the mixed gas is not fed.

### Examples 12 to 15 and Comparative Example 6

The composition of the mixed gas in step (b) is changed according to what are shown in the following Table 4. In addition, the silicon-carbon negative electrode material is prepared the same as in Example 3, and C₁₀, C₂₀, and C₃₀ are measured, so as to prepare a secondary battery.

Performance evaluation is performed the same as that in Example 3, and details are shown in Table 4.

**Table 4**

| | Step (b) | XPS test | | | Silicon-carbon negative electrode material | | Secondary battery | |
|---|---|---|---|---|---|---|---|---|
| | Mixed gas (volume ratio) | C₁₀ (%) | C₂₀ (%) | C₃₀ (%) | Specific delithiated capacity (mAh/g) | Initial coulombic efficiency (%) | Specific discharge capacity (mAh/g) | Initial coulombic efficiency (%) |
| Example 12 | Ethylene and argon gas (3:7) | 17.3 | 8.5 | 3.6 | 1968 | 93.04 | 202.8 | 88.17 |
| Example 13 | Ethane and argon gas (3:7) | 19.7 | 8.7 | 3.8 | 1940 | 91.72 | 200.7 | 87.26 |
| Example 14 | Ethylene, methane, and argon gas (2:1:7) | 16.7 | 8 | 3.2 | 1984 | 93.80 | 203.8 | 88.61 |
| Example 15 | Acetylene and argon gas (3:7) | 15.9 | 7.8 | 3 | 1975 | 93.37 | 205 | 89.13 |
| Comparative Example 6 | Propane, methane, and argon gas (2:1:7) | 29.5 | 12.5 | 8.5 | 1841 | 87.02 | 191.0 | 83.04 |

It can be known from the results in Table 4 that in step (b), by selecting the carbon source gas from at least one of ethane, ethylene, acetylene, and methane, the obtained silicon-carbon negative electrode material has a low content of high-valence silicon, and C₁₀ is less than 25%. In the comparative example 6, the mixed gas of propane, methane, and argon gas is used. Because a decomposition temperature of propane is excessively high, and uniformity and integrity of coating are poor, a content of high-valence silicon is excessively high, and the technical effect of the present disclosure cannot be achieved.

It needs to be noted that the present disclosure is not limited to the above examples. The above examples are only illustrative, and the examples within the scope of the technical solution of the present disclosure that have substantively the same composition and the same role and effect as the technical idea are all included in the technical scope of the present disclosure. In addition, within the scope of not departing from the gist of the present disclosure, various variations made to the examples that are conceivable to those skilled in the art and other modes constructed by combining some constituent elements of the example are also included in the scope of the present disclosure.

### Industrial applicability

The present disclosure provides a silicon-carbon negative electrode material and a preparation method therefor. the silicon-carbon negative electrode material includes a carbon skeleton having a pore structure and a silicon-based material arranged in the pore structure, where in a region formed by extending from a surface of the silicon-carbon negative electrode material inward by 10 nm away from the surface, a content of high-valence silicon is less than 25% relative to a total amount of low-valence silicon and the high-valence silicon, where the low-valence silicon is silicon with a valence of 0 to 2, and the high-valence silicon is silicon with a valence of 3 to 4. Therefore, the specific delithiated capacity and the initial coulombic efficiency of the silicon-carbon negative electrode material can be improved, and the specific discharge capacity and the initial coulombic efficiency of a secondary battery can be enhanced.

## Claims

1. A silicon-carbon negative electrode material, wherein the silicon-carbon negative electrode material comprises a carbon skeleton having a pore structure and a silicon-based material arranged in the pore structure, wherein in a region formed by extending from a surface of the silicon-carbon negative electrode material inward by 10 nm away from the surface, a content of high-valence silicon is less than 25% relative to a total amount of low-valence silicon and the high-valence silicon, wherein the low-valence silicon is silicon with a valence of 0 to 2, and the high-valence silicon is silicon with a valence of 3 to 4.

2. The silicon-carbon negative electrode material according to claim 1, wherein in the region formed by extending from the surface of the silicon-carbon negative electrode material inward by 10 nm away from the surface, the content of the high-valence silicon is less than or equal to 20% relative to the total amount of the low-valence silicon and the high-valence silicon.

3. The silicon-carbon negative electrode material according to claim 1 or 2, wherein in a region formed from a distance of 10 nm away from the surface of the silicon-carbon negative electrode material to a distance of 20 nm away from the surface of the silicon-carbon negative electrode material, the content of the high-valence silicon is less than or equal to 20% relative to the total amount of the low-valence silicon and the high-valence silicon, and optionally, less than or equal to 10%.

4. The silicon-carbon negative electrode material according to any one of claims 1 to 3, wherein in a region formed from a distance of 20 nm away from the surface of the silicon-carbon negative electrode material to a distance of 30 nm away from the surface of the silicon-carbon negative electrode material, the content of the high-valence silicon is less than or equal to 10% relative to the total amount of the low-valence silicon and the high-valence silicon, and optionally, less than or equal to 5%.

5. The silicon-carbon negative electrode material according to any one of claims 1 to 4, wherein the silicon-carbon negative electrode material satisfies at least one of the following conditions:
(1) a volume distribution particle size Dv50 of the silicon-carbon negative electrode material is 5 µm to 10 µm, and optionally, Dv50 is 6 µm to 9 µm;
(2) a specific surface area of the silicon-carbon negative electrode material is less than or equal to 5 m²/g, and optionally, less than or equal to 2 m²/g;
(3) a powder compacted density of the silicon-carbon negative electrode material under a pressure of 3000 N is 0.8 g/cm³ to 1.2 g/cm³, and optionally, 0.9 g/cm³ to 1.2 g/cm³;
(4) a tapped density of the silicon-carbon negative electrode material is 0.9 g/cm³ to 1.1 g/cm³, and optionally, 1.0 g/cm³ to 1.1 g/cm³; and
(5) a specific delithiated capacity of the silicon-carbon negative electrode material is 800 mAh/g to 2500 mAh/g, and optionally, 1000 mAh/g to 2000 mAh/g.

6. The silicon-carbon negative electrode material according to any one of claims 1 to 5, wherein a pore volume of the carbon skeleton is 0.4 cm³/g to 1.5 cm³/g, optionally 0.6 cm³/g to 1.2 cm³/g; and/or
a volume proportion of micropores whose pore diameters are less than 2 nm relative to the pore volume is greater than or equal to 60%, and optionally, greater than or equal to 80%.

7. The silicon-carbon negative electrode material according to any one of claims 1 to 6, wherein the surface of the silicon-carbon negative electrode material has a coating layer; and optionally, the coating layer is a carbon coating layer.

8. A preparation method for the silicon-carbon negative electrode material according to any one of claims 1 to 7, comprising the following steps:
a step of forming silicon-carbon particles, wherein the carbon skeleton having the pore structure is allowed to react with a silicon source gas to form silicon-carbon particles having the silicon-based material in the pore structure; and
a step of treating the silicon-carbon particles, wherein a mixed gas comprising a carbon source gas and an inert gas is fed to the silicon-carbon particles at a gas feeding amount greater than 0 L/min and less than or equal to 10 L/min under a condition that a temperature is 500 °C to 700 °C and a pressure is 0 kpa to 1 kpa, and the carbon source gas is selected from at least one of ethane, ethylene, acetylene, and methane.

9. The preparation method according to claim 8, wherein in the step of treating the silicon-carbon particles, the mixed gas is fed to the silicon-carbon particles at the gas feeding amount of 0.5 L/min to 4 L/min under the condition that the temperature is 550 °C to 650 °C and the pressure is 0 kpa to 0.5 kpa.

10. The preparation method according to claim 8 or 9, wherein
the mixed gas comprises 10% by volume to 70% by volume of acetylene, 0% by volume to 20% by volume of methane, and 10% by volume to 90% by volume of inert gas; and
and optionally, the mixed gas comprises 15% by volume to 60% by volume of acetylene, 5% by volume to 10% by volume of methane, and 30% by volume to 80% by volume of inert gas.

11. The preparation method according to any one of claims 8 to 10, wherein the step of forming the silicon-carbon particles comprises the following step:
vacuumizing a reaction apparatus, and then feeding the inert gas.

12. The preparation method according to any one of claims 8 to 11, wherein the step of forming the silicon-carbon particles comprises the following step:
heating the carbon skeleton having the pore structure to 400 °C to 550 °C in the reaction apparatus, to exclude oxygen gas from the carbon skeleton.

13. The preparation method according to any one of claims 8 to 12, wherein the step of forming the silicon-carbon particles comprises the following step:
feeding a mixed gas of the silicon source gas and the inert gas into the reaction apparatus, and performing deposition at a temperature of 400 °C to 550 °C for 2 hours to 10 hours, to form the silicon-carbon particles.

14. The preparation method according to any one of claims 8 to 13, wherein the silicon source gas is selected from one or more of silane, disilane, dichlorosilane, and trichlorosilane; and optionally, the silicon source gas is silane.

15. The preparation method according to any one of claims 8 to 14, wherein the inert gas is argon gas.

16. A negative electrode plate, comprising the silicon-carbon negative electrode material according to any one of claims 1 to 7 or a silicon-carbon negative electrode material prepared by using the preparation method according to any one of claims 8 to 15.

17. A secondary battery, comprising the negative electrode plate according to claim 16.

18. A power consuming apparatus, comprising the secondary battery according to claim 17.
